# EUROPEAN PATENT APPLICATION

(11) **EP 1 544 774 A1**
(43) Date of publication of application: **22.06.2005**
(21) Application number: 04106237.3
(22) Date of filing: 02.12.2004
(51) Int. Cl.: G06F 17/60

(54) **Dynamic late binding of third party on demand services in an on-demand infrastructure**

(30) Priority: 19.12.2003 EP 31048200
(71) Applicant: International Business Machines Corporation, Armonk, N.Y. 10504 (US)
(72) Inventor: BREITER, Gerd, 72218, Wildberg (DE); KREYSS, Jutta, 70178, Stuttgart (DE); SCHMIDT, Andrea, 71034, Böblingen (DE); EILAM, Tamar, 10025, New York (US); MILLER, Sandra, Irvington, NY New York 10533 (US)
(74) Representative: Klein, Hans-Jörg

(57) **Abstract**

The present invention relates to the field of networked computer and refers to a method and respective system for providing on-demand services via an electronic network from a service provider (SP) to a client requesting a service, wherein a plurality of third-party service providers (TPSP) are involved for providing one or more on-demand services (called TPSP service) as a possible contribution to said client-requested service. In order to simplify the selection of a TPSP service for being provided by the SP, the following steps are proposed:
a) calling (710) a Meta Service Selector (MSS) to select the best TPSP service according to a predetermined evaluating scheme referring to predetermined evaluation attributes and a predetermined evaluation algorithm,
b) sending (730) an enquiring request enquiring respective request properties of a TPSP service to a TPSP, wherein the enquiring request demands the enquired service property information to be delivered formatted according to an interface data scheme agreed on between the enquiring SP request and said TPSP service,
d) evaluating (775) the enquired information from said plurality of TPSPs according to a predetermined rating (780) scheme,
e) selecting (785) a particular TPSP service for providing it via an electronic network to a service requesting client of the SP.

## Description

### 1. BACKGROUND OF THE INVENTION

### 1.1. FIELD OF THE INVENTION

The present invention relates to the field of networked computer application and refers to a method and respective system for providing on-demand services via an electronic network from a service provider to a client requesting a service, wherein one or a plurality of third-party service providers (TPSP) are involved for providing one or more on-demand TPSP services as a contribution to said client-requested service.

### 1.2. DESCRIPTION AND DISADVANTAGES OF PRIOR ART

An On-demand Service, referred to herein as ODS, or such TPSP service may be any kind of information technology (IT) functionality offered to given TPSP scribers on a contractual basis. The contract can be created explicitly or implicitly. The service is used by the TPSP scriber at certain conditions on a usage or on a fee based model.

In an On-Demand computing environment offering providers want to sell On-demand services provided by themselves and others. The integration of TPSP services gives the offering providers a great business opportunity for the following reasons:

First, it substantially reduces the time to deliver new On-demand Services. Second, it allows the provider to offer much broader and richer set of On-demand Services, thus increases its visibility in the market. Last, it substantially decreases the provider's risk since he/she does not have to incur the cost of maintaining resources needed for services obtained from a TPSP.

In state of the art, a significant effort is required to integrate TPSP services into a provider's offering. In lack of standardization, TPSP services often have proprietary access mechanisms that an offering provider needs to adhere to when integrating such a service in his own offerings. There are no common access mechanisms for provider-owned resources, or for remote services and resources from TPSP. As a result of this complexity, many providers choose not to integrate at all TPSP services in their offerings.

On-demand computing - regarded from the end-user's point of view - is also a quite young feature in IT-business. As its name indicates, this approach tries to enable enterprises to use IT-resources in the actually needed scale at the very point in time, in which an enterprise actually is required to use such resources in order to fulfil any business aim. Enable enterprises to use IT resources as needed and then to fulfil any business goal. If an on-demand service can be applied successfully the requesting enterprise saves money. Because its own IT-equipment purchased and maintained by the provider is considerably more lean in comparison with a situation, in which the requesting enterprise was constrained to purchase such IT-infrastructure by himself, although it is used actually quite seldom, dependent of the nature of the business.

State of the art in this very young technology is found quite seldom. At an Internet web site, retrievable under
http://wwws.sun.com/software/sunone/innercircle/newsletter/feature0303.html or
http://it.sun.com/eventi/jc03/pdf/parallela_7/giorno_28/N1_at_Ja va_Conference.pdf, and
http://docs.sun.com/db/doc/806-4777
an approach of resource virtualisation is disclosed, that describes how to best meet the requirements of on-demand services.

The following paragraphs describe the state of the art approach for all major participating components, which are required to be introduced as a base for the present invention.

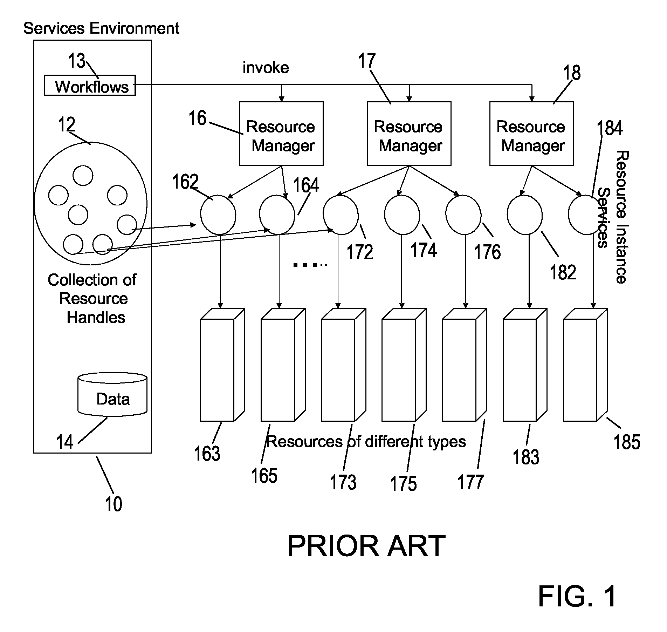

With reference to **fig. 1**, which is a schematic diagram representation illustrating state of the art systems of a SP's service environment and its relation to a plurality of resource managers maintained by the SP, each service is directly related to a Services Environment 10, further referred to herein as SE. The SE represents a plurality, or some collection of resources 163, 165, 173, 175, 177, 183, 185, necessary to fulfill the service. It contains operational data in a dedicated database 14 as well as a set of workflows 13 to create/manage/delete the required resources.

Resources 163, 165, 173, 175, 177, 183, 185 may be either hardware resources, software resources, or storage resources. Also useful pre-defined combination of resources can be regarded as a single *composite* resource. Hardware resources are such as computing nodes, network resources such as switches, and firewalls. Software resources are such as applications.

Each of these resources is managed by a Resource Manager 16, 17, 18, further referred to herein as RM. An RM may manage a pool of resources of the same type.

Resource handles, the collection of which is denoted by reference sign 12 identify resource instance services, which are kept within the Services Environment's collection of resource handles.

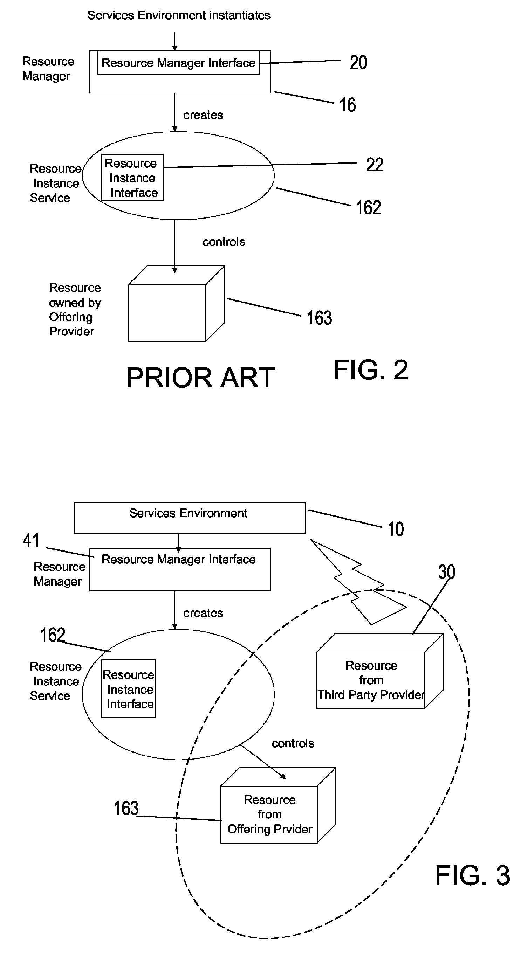

With additional reference to **fig. 2**, which is a state of the art schematic diagram representation illustrating the basic functionality of such state of the art interoperation between a SP service environment and a particular resource manager having access to a particular resource, the integration of resources into an SE for the use within an On-demand Service is done in state of the art via a Resource Manager (RM) 16. The level of abstraction of this integration can be chosen by the respective resource manager developer according to the problem domain to be addressed.

A resource instance is a specific combination of resources assembled and dedicated for fulfilling the desired service at a predetermined point in time. It is not depicted in fig. 2.

Each resource instance is controlled by above-mentioned Resource Instance Services (RIS), e.g. denoted as 162 in fig. 1. RISs 162 are created by the RMs, e.g., denoted as 16. The resources 163 and RIS 162 are owned by the provider and are kept in the provider's premises. However, they can be local or distributed in several locations that the provider owns.

In order to introduce the skilled reader to the objective of the present invention and to explain the complexity and difficulty of integrating TPSP service, let's consider a potential typical scenario, which illustrates state of the art problems:

Assume, a SP wants to offer a web mail service via the Lotus (TM) Workspace Messaging product as an ODS. This offering provider likes to build up three different flavours of the web mail, platinum, a gold and a silver service. These three different services vary by the amount of storage available for each user and the frequency of mail backups. E.g., a silver user gets a maximum of 60 MB, a gold 90 MB and a platinum 120 MB. The backup frequency of a silver user is once a month, of a gold user once a week and a platinum user once a day.

The provider has the infrastructure, resources, and tools, and knowledge required to provide all the components of the offering except for the backup service. Until this point the provider is fine regarding the set up of the On-demand infrastructure to offer these three (gold, platinum, silver) services and to charge for them except handling the backup service. This service is not part of the current expertise of this provider and he is assumed to be neither willing to invest into a skill for his staff members nor to invest into the required storage devices.

This is the point in time, when the provider is urgently looking for a TPSP service, who offers this functionality, and for the decision, in case of a plurality of TPSP services, which TPSP service to select.

Finally, a plurality of, for instance six TPSPs are found, who offer the required backup service. Possibly, these TPSP services may be assumed to have a proprietary interface. The integration of this interface into the web mail offering is thus a significant effort for the SP due to required preparation and programming work. As a result, a SP may be in many cases assumed either not to spend this effort and disadvantageously not being able to select the best service offer.

### 1.3. OBJECTIVES OF THE INVENTION

It is thus an objective of the present invention to provide a method according to the preamble of claim 1, for an integrative solution, how to find automatically the best TPSP service for a desired SP service without human intervention.

### 2. SUMMARY AND ADVANTAGES OF THE INVENTION

### 2.1

First, the following disclosure is given for enabling a general "automatic inclusion" of TPSP services into the service environment of an SP:

According to the basic advantage of the inventional concept a maximum benefit for the offering provider results from an encapsulation and automatic integration of remote resources and services, which is best provided by the present invention via resource managers providing this common access interface.

Furthermore, a set of resource managers offering similar functionality by different TPSP services can be bundled by an additional component, which handles the selection of one TPSP service out of this set of TPSP services offered by the Resource Managers. The selection complies with the selection criteria specified by the SP. This is described in more detail in the second preferred embodiment later below.

Advantageously, said a generic interface definition allows performing the following steps at the SP side:
a) requesting a handle for said TPSP service from said TPSP,
b) receiving a response to said request including a handle to a resource instance service dedicated to fulfill said TPSP service,
c) issuing an allocation order for allocating resources defined by said resource instance service,
d) using said TPSP service via an access interface associated with said allocated resources,
e) issuing a deallocation order for said used resources.

Consequently, due to the distributed nature of the present invention, which comprises respective counterparts of the inventional method at the TPSP side, said generic interface definition allows performing the following steps at the SP side:
a) receiving a request for a handle for said TPSP service from said SP,
b) creating a resource instance service associated with said requested handle,
c) issuing said requested handle to the requesting SP,
d) receiving an allocation order for allocating resources defined by said resource instance service,
e) allocating said ordered resource, if said resources are available for use,
f) receiving usage commands for the usage of said allocated resources via an access interface associated with said allocated resources,
g) receiving a deallocation order for said used resources,
h) deallocating said used resources.

By that, an effective cooperation is enabled between the SP and TPSP, which comprises at least the basic features needed when using on-demand services included in the own service environment.

When further said generic interface definition additionally allows performing the steps of subscribing and unsubscribing to a resource,
then the field of use is expanded to even more complex business situations, in which a client is accustomed to book some reservation for the desired service, and in which it is desired to take the final decision, if and when to use the service is able to be delayed quite long.

When further advantageously, a resource instance comprises another service, then the inventional principle can be basically continued in order to bring up a chain of multiple services, from fourth, fifth, etc. SPs. These following TPSP-TPSP services can be included again by using a respective resource manager.

When said generic interface definition further allows performing the steps of disclosing to the SP information concerning the availability of resources available at the TPSP, then the SP has the possibility to first have a look on the offered services, and compare maybe to different provider's offers, and then to take a decision, to which on-demand service to subscribe. This enhances the usability of the inventional concept.

When the foregoing method and steps thereof are implemented as a stateful web service made available via the internet, the potential choice between service offerers is basically assumed to increase rapidly, what will increase the acceptance of this inventional approach in many businesses and enterprises.

Enabled for an automatic inclusion of TPSP services into the service environment of the SP as described above, the following inventional features are disclosed:

### 2.2

The above-mentioned objective of the invention is achieved by the features stated in enclosed independent claims. Further advantageous arrangements and embodiments of the invention are set forth in the respective subclaims. Reference should now be made to the appended claims.

According to the broadest aspect of the present invention a method, comprising a so-called Meta Service Selector abbreviated herein as MSS and implented as a data processing program, is disclosed for selecting a particular TPSP service from a plurality of available TPSP services covering similar or the same business objective and being offered by a respective one or a plurality of TPSPs to a SP via an electronic network, said method being characterized by the steps of as follows and performed by a SP:
a) calling the Meta Service Selector (MSS), for example in a particular form thereof, later described and called a "Meta Resource Manager" and abbreviated as MRM, to select the best TPSP service according to a given evaluating schema referring to certain evaluation attributes and to some particular evaluation algorithm,
b) sending an enquiring request, called later below the "get service properties request". The request asks for properties of said offered respective service. Ie. the request demands the enquired service property information to be delivered formatted according to an interface data scheme agreed on between enquiring SP method and said TPSP service, wherein said interface is called for example a "get service properties Interface",
c) receiving the enquired information on the requested service properties,
d) evaluating the enquired information from said plurality of TPSP services by the MSS according to a predetermined rating scheme,
e) selecting a particular TPSP service for providing it via an electronic network to a service requesting client.

As the overall inventional method is distributed between an SP and several TPSPs, the invention has a "distributed" nature. The respective main steps performed at the TPSP are as follows:
a) receiving said enquiring request enquiring respective request properties of a TPSP service to a TPSP, wherein the enquiring request demands the enquired service property information to be delivered formatted according to an interface data scheme agreed on between the enquiring SP request and said TPSP service,
b) answering the enquired information to the enquiring Service Provider.

This inventional method is suited in particular for the provision of simply-structured TPSP services, in particular provided by stateless requests.

Examples are requesting some stock options, Internet telephony via the cheapest telephony service offerer, Internet-based telephony including video information, Pay-TV via Internet, etc.

The above "best service selection" is basically enabled by a Meta Service Selector (MSS), which takes requests to select the best TPSP service according to an evaluation schema referring to an evaluation algorithm and to evaluation attributes. The MSS sends out enquiring requests prompting the TPSPs for responding according to predefined and agreed request specification formats. Furthermore the MSS processes the enquired and received TPSP service property information by a ranking algorithm, which is able to be freely weighted according to the actual demand.

The great advantage of this general approach is that an automated, easy-to-implement procedure is disclosed, how a SP is enabled to find the TPSP having the best offer for a particular TPSP service in an electronic network, wherein "best" can be defined freely, very flexible according to different preferences. The automatic, short-time selection opens up consequently the feature "late binding", ie, the possibility that the SP may decide very "late", ie, shortly before actually the TPSP service is used.

Thus, a flexible and quick setup of an demanded business services and flexible and quick reaction to changes in the demanded business are obtained as the SP service properties including price and service quality information can be obtained easily, quasi-automatically without human intervention and within a short time.

It should be understood that the term "best" as given in the claims can be differently defined dependent of the actual needs of the service requestor, one definition focusing the quality and the safety of the service, another definition more focusing the price thereof, for example.

There are basically two preferred alternatives for implementing said Meta Service Selector:
The first is, when the on-demand TPSP service is encapsulated via a resource instance created by a Generic Resource Manager (GRM) acting as interface. This will be described in more detail with reference to the first embodiment later below.
Herein, the TPSP service is made easily available to the SP or the client by a resource instance service managed by the SP and instantiated by the TPSP.

The second alternative proposes that the interface data scheme agreed on between the SP and said TPSP is part of the requested TPSP service. This will be later decribed in more detail in the second preferred embodiment.

When further advantageously, the enquiring request specifies time information related with the TPSP, the advantage results that the inventional method enables for even more flexibility and ease of use, the end-user service requester may definitely take profit of, as his demands are even more completely reflected already within the enquiring request.

### Examples for different types of time information are as follows:

For example, a flag can be used for encoding the point in time, when the TPSP service has to be selected, which for example may vary amongst the following alternatives:
a) at the point in time, at which the TPSP service is offered by SP, or,
b) at the point in time, at which the client of the SP service declares his willing to buy the SP service, which refers to the TPSP service, by e.g. subscribing to the SP service , or
c) at the point in time, at which the TPSP service is invoked the first time, wherein the involved services are actually used for receiving the business aim of the request, a feature, which is called in here as "late binding", or
d) at each point in time, at which the TPSP service is invoked.

The late determination of the TPSP service, ie the late binding, when a SP actually requests a TPSP service, can be achieved, because the inventional method steps including their implementation algorithms are very fast and efficiently to be performed. Thus, a maximum flexibility is achieved regarding the time, when actually to decide for a particular TPSP service. The client may take large profit from this advantage in situations, where TPSP service offerings change quickly.

### 3. BRIEF DESCRIPTION OF THE DRAWINGS

The present invention is illustrated by way of example and is not limited by the shape of the figures of the drawings in which:
Fig. 1 is a schematic diagram representation illustrating state of the art systems of a SPs service environment and its relation to a plurality of resource managers maintained by the SP;
Fig. 2 is a state of the art schematic diagram representation illustrating the basic functionality of such state of the art interoperation between a SP service environment and a particular resource manager having access to a particular resource;
Fig. 3 is a high-level schematic diagram representation illustrating the basic issue, which is addressed by the present invention integrating resources from a TPSP into the service environment of the SP depicted in figures 1 and 2;
Fig. 4 is a representation according to fig. 3 and illustrating more details of the inventional concept reflected therein;
Fig. 5 is a schematic block diagram representation illustrating the control flow in an inventive method implemented in respective parts at the SP side (left) and the TPSP side (right), and
Fig. 6 is a schematic block diagram representation illustrating the basic identity items for a given exemplary service instance,
Fig. 7 is a schematic block diagram representation illustrating the control flow in a first preferred embodiment of an inventional method implemented at the service provider side for identifying the "best" one of all offered services, which were automatically included according to figs 3 to 6,
Fig. 8 is a high-level schematic diagram representation illustrating the issue, which is addressed by the present invention,
Fig. 9 is a schematic block diagram representation illustrating the control flow in a second preferred embodiment of an inventional method implemented at the SP side for identifying the "best" one of all offered TPSP services due to the MSS and for integrating resources from a TPSP into the service environment of the SP by using the RM within the TPSP service.

### 4. DETAILED DESCRIPTION OF THE PREFERRED EMBODIMENT

### 4.1 FIRST PREFERRED EMBODIMENT

With general reference to the figures and with special reference now to **fig. 3** illustrating in an overview representation, how the inventional integration of TPSP services into the service environment 10 of the SP is done, the skilled reader will appreciate that resources from a TPSP depicted with reference sign 30 can be used according to the invention by the services environment 10 present at the SP side.

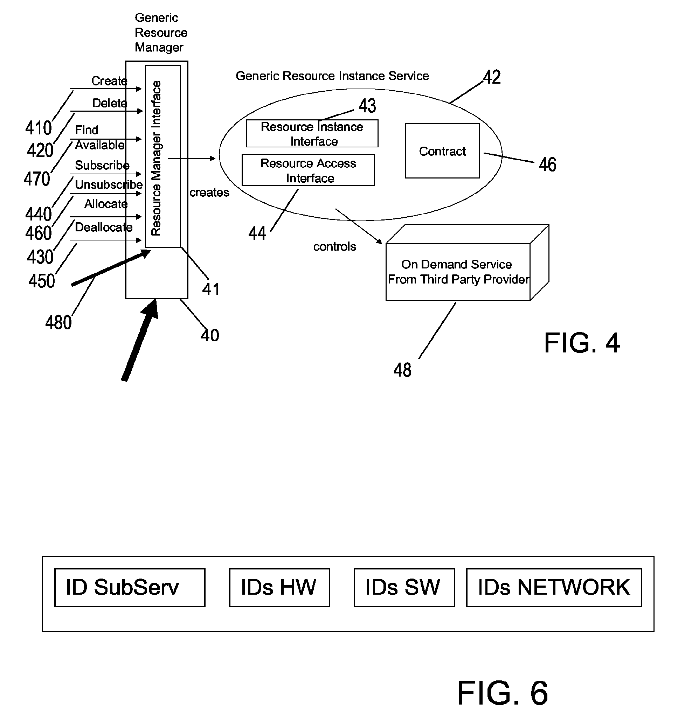

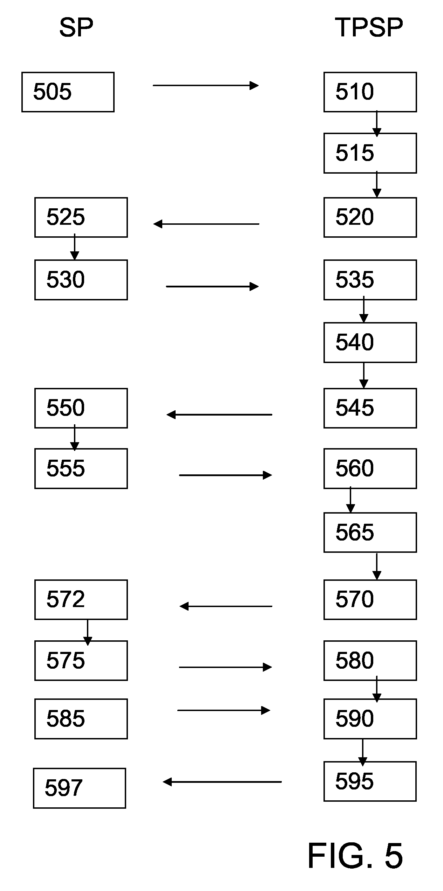

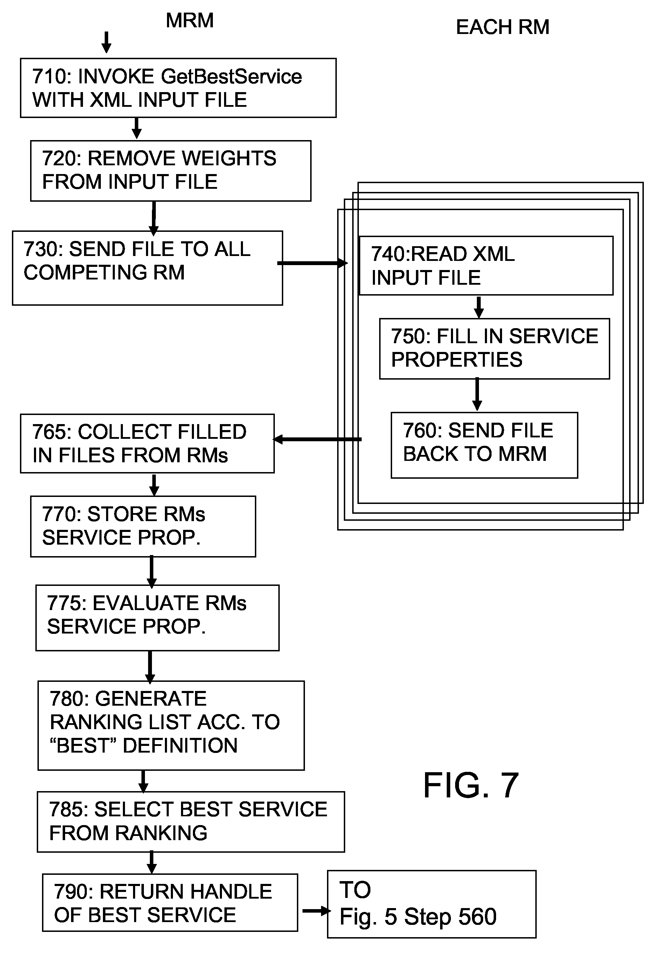

This is to illustrate the basic approach of the invention to introduce a generic resource manager 20 (see fig. 2) having a generic, i.e., a "standardizable" interface layer that can be used both to manage the provisioning of resources and to encapsulate and manage the provisioning of TPSP services. This inventional interface layer 20 can advantageously be standardised and significantly facilitates the integration of TPSP service into a providers computing environment and offerings. This is depicted with the dotted line encircling the resources 163 resident at the SP side as well as the TPSP resources 30 resident at the TPSP. This abstract approach will be detailed further with respect to figures 4 and 5.

With reference to **fig. 4**, in a preferred embodiment of the present invention a generic resource manager 40 is implemented as a dedicated server system at the TPSP side, which is able to communicate with a number of SPs not depicted in fig. 4 via an inventional interface 41, which best is subjected to a IT-standard, by way of some predefined functionality relevant to the provisioning of resources from the TPSP to the SP. This functionality may be preferably implemented as a class having some predefined methods as they are depicted at the left margin of fig. 4.
One generic resource manager 40 is responsible per one type of resource. It "knows" all resources of the type this generic resource manager is responsible for. Therefore, resource manager 40 is able to determine, whether one resource of the managed typed is not used at any required timeframe.

This functionality can be divided into necessary functions and optional functions, which are although very preferred as they facilitate service provisioning. The functionality mentioned so far should be offered by each individual resource manager 16, 17, 18 (see fig. 1) or 20, see fig. 2. Those functions are defined as follows, only to mention the aspects in close relation to the present invention:

The create function 410 creates a generic resource instance service 42 for a particular service or a particular resource and returns a reference to it. This generic resource instance service 42 is responsible to manage a dedicated resource of the type, managed by resource manager 40.

The delete function 420 deletes a generic resource instance service 42 for such service or such resource.

The allocate function 430 allocates the required resources for a requested service or resource. This function may also be used, following an invocation of the subscribe operation. The service or resource is finally activated and ready for use in both cases.

The deallocate function 450 is a call, which deallocates the resources for a resource or service, which was allocated before, see above.

The unsubscribe function 460 represents basically the reversal of the subscribe function.

The "find available" function 470 searches for all available resources required to run requested TPSP services at the TPSP. This functionality requires a bookkeeping of the resource, required to run offered On Demand Service. E.g., it can easily be implemented when the available services per RM are listed and maintained in a relational database application.

By this above functionality the inventional generic resource manager 40 is able to perform all management functions, which are required for instantiating a generic resource instance service 42. This generic resource instance service controls basically the TPSP service 48 from the TPSP. This control is realised by a respective generic resource instance interface 43 within each resource instance service 42 and the usual usage interface 44 depicted in fig. 4 as resource access interface. Via said access interface the resources from the TPSP are later actually used.

The relationship between the resource instance interface 43 and the resource manager interface 41 is special, because the resource instance interface 43 maps the allocate (430) and deallocate calls (450) of the resource manager interface 41, which are required to set up the dedicated resource. This covers e.g. the differences in setting up a zLinux server in general as a resource or a database on zLinux. The allocate call (430) triggers the installation and configuration of selected resources.

Further it should be noted that a contract 46 is concluded between the SP and the TPSP at that point in time, in which the SP basically subscribes to a TPSP service. In order to do that properly, a person skilled in the art will appreciate that for the contracting purposes and the accounting and billing procedures behind it is recommended to include a unique key and a subscriber ID into the request, by which a TPSP service is actually subscribed to.

The functionality described above with the functions of create, delete, find available, subscribe, unsubscribe, allocate and deallocate represents a preferred way for implementing the generic interface definition used between said SP and said TPSP SP. This functionality is programmed in a form agreed on between SP and TPSP such that the syntax and semantic of said interface definition is understood and clearly and properly to be applied at both providers.

As a person skilled in the art may imagine, the proposed generic interface definition having a semantic as exemplarily described above with the above-mentioned functions is able to encapsulate the requested services or TPSP services into the service environment of the SP. This is due to the fact, that basically no manual work is necessary at neither the provider nor the TPSP for finding available resources at the TPSP, or for the reservation of such resources, or for the actual allocation and use of such resources or services. By that basically full automation of the workflow between SP and TPSP it is possible to integrate the resources and services offered by a TPSP into the service environment of the original SP. Thus, this original SP may easily take profit from such TPSP services and is able to forward the TPSP services to his own clients. This makes it easy to increase the own service offering by the SP.

Thus, even more advantageously said generic resource manager 40 maintained by TPSP is subjected to a standard syntax and semantic. By that the interaction between TPSP and SP is even more facilitated.

Further, it is advantageous to implement such general resource manager functionality depicted as 40 as described above or similar thereto as a stateful web service. This feature opens up easy use of this functionality via the Internet.

With further reference to **fig. 5** a preferred embodiment of the inventional method is described next below. Fig. 5 shows a schematic block diagram representation illustrating the control flow in an inventive method implemented in respective parts at the SP side (left) and the TPSP (right).

This preferred embodiment comprises the advantageous, optional features of the "find available" function 470 described above and the subscribe 440 and unsubscribe 460 functionality, also described above. It should be understood, of course, that many variations of the underlying workflow between the SP and TPSP may exist, which may be recommended depending on the respective use of the inventional method.

The following exemplary use is that a SP, whose actions are depicted at the left column of fig. 5 wishes to use a backup TPSP service offered by a TPSP (right column of fig. 5), in order to offer to any end-client not depicted in fig. 5 the additional backup service as an add-on to an email service he was basically offering already before to the end-clients. As the SP has neither the own resources nor the own know-how required to offer the backup service he desires to purchase this backup service as a TPSP service added on his own email service.

The TPSP is assumed to offer his TPSP services e.g. in an Internet portal, and the generic resource manager, which was described above, is assumed to be implemented at the respective web server at the TPSP. Thus, in this case the offering and accepting of the TPSP service is implemented as a stateful web service.

In a first step 505 the SP requests the overall offer of services, offered by the TPSP. This is simply done by clicking on the respective button in the respective web site maintained by the TPSP.
Thus, in a step 510, TPSP receives such request and responsive to that triggers its "create" and "find available services" functionality as described above in order to show the total of the services, TPSP offers to the requesting SP.
Thus, in a step 515 each TPSP service or package of TPSP services, is displayed to the SP, if this is useful to apply. This may be in a case, in which for example a strong price reduction can be obtained for a group of services compared to the sum of the respective plurality of single services. Thus, the services must be distinguishable by some service ID.

A service ID as exemplarily and schematically depicted in fig. 6 is comprised exemplarily in a data set further comprising advantageously a description of the service or TPSP service, the price per time if used, all other information, which is required from the TPSP side to close a contract with the SP for the usage of the required service, and other descriptive information the requesting SP may be assumed to be interested in to know before he decides to subscribe to a particular TPSP service or not. Additional information, dependent of the individual use and application of the inventional method can be added. The dataset in fig. 6 is thus to be understood only in a symbolic sense defining the basic information required in this context.

Thus, in a step 520, TPSP issues the TPSP service collection as an offer to the requesting SP. It should be added that the above-mentioned data set describing the TPSP service offered to the SP may further contain data fields telling from which time until which second time the respective service is available and, optionally if there is any SP already registered who has filed any serious interest to use the service in a respective future time span, such as it is known from state of the art booking/reservation systems.
In step 525 SP will receive all information needed about the available TPSP services from the TPSP. Supplied with this information SP may take any required considerations regarding economical aspects, operational aspects, etc., which are useful to make up a decision if or if not to select one or more of the offered TPSP services. Thus, SP may be assumed to request in a step 530 a handle for a particular, selected TPSP service from the offering TPSP. In a web service environment this will be implemented as usual in state of the art, for example by highlighting and marking up a TPSP service for selection. This selection is transported as a request via the electronic network for a handle for said TPSP service in order to open up the possibility to continue the procedure and to make some kind of booking or reservation or actually immediate use of the service, the implementation of which will be described next below.

In a step 535 TPSP will receive the request for said handle for said selected TPSP service and will create in a further following step 540 a so-called resource instance service, which is associated with said requested handle. This is done according to a specific advantageous aspect of the present invention. Said resource instance service has an information structure, which identifies all relevant hardware and software to be used for fulfilling the request, e.g., by providing respective ID-tags to said resources.

In the exemplary use introduced further above of realising a backup TPSP service in the context of an email service offered by the SP the TPSP will have to make a reservation for some hardware, i.e. some storage devices operatively coupled to some processing power and a respective software solution for performing the required backup TPSP service. Thus, any hardware unit and software unit should have a respective ID, which can be addressed within such resource instance service. It should be noted, that it is useful to make up a standard for the format, in which those IDs are distributed in such resource instance service description.

Assume a case, in which the TPSP manages its own resources within a relational database, then a respective read access to this database must be performed in order to select the respective three resources, which are available for the TPSP.

Further, TPSP generates a handle for the requested service. This handle comprises all information necessary to identify all resources, expected to be used during the lifetime of the respective requested TPSP service. Thus and with reference to fig. 6 showing the basic identity items for a given service instance, for example a handle may be comprised of a collection of an exemplary number of 15 IDs describing all necessary hardware devices, network connections within the TPSP service environment, software licenses required to perform the doing of the service, etc. It should be added, that it is required for the TPSP to manage all these IDs in order to be able to determine which of his resources are available in a respective selectable time span, and which are not.

In a next step 545 the generated handle for the requested TPSP service is issued to the SP. SP receives this handle e.g. the TCPIP address and the user- Id with password, in a response to his own request and stores the received handle within its own service environment. Thus, the SP is enabled to use this handle for identification of a particular resource instance service dedicated at the TPSP to fulfil the desired TPSP service, step 550.

Further, in a step 555 the SP issues an allocation request via electronic network and the above-mentioned web server application for allocating the resources defined by said handle and thus by said above-mentioned resource instance service. The TPSP will, when receiving in a step 560 said allocation order for allocating the above-mentioned resources, store that order into a respective contract database, in order to process such data for accounting and billing purposes.

Next, in a step 565 TPSP will allocate the ordered resources if the resources are available for use, at the desired point in time, in which the allocation is ordered to take place.

A subscription can take place a long time before the actual allocation of the resource. But the allocation call by the SP should be quite close to the usage of the TPSP service to use the resource efficiently. A respective allocation confirmation is issued in a step 570 to the SP, accompanied by all required additional information for enabling the actual use of the required resources. Thus, an URL may be added in this confirmation message in order to enable for a remote procedure call issued either from the SP or- if desired - from the end-client, directly. The accounting and billing procedures between client and SP are not immediate subject of this present application. It should be preferred, however, a solution, in which the client is billed through the SP alone and the SP is billed by the TPSP.

Then, after receipt and processing of the data according to step 572, in a step 575 SP uses the requested TPSP service via an access interface associated with the allocated resources. In the example given just for illustration purposes the access interface comprises sufficient information, to actually find, identify and use the required resources. For example, a TCPIP address, a hardware ID for a mail backup server, and the commands to perform the backup should be defined in said access interface.

In a step 580 the TPSP will collect data on the usage of the subscription by the SP. Based on the usage data the TPSP is going to bill the SP.

The requested resources may be used during the time span defined during the subscription time agreed upon in the contract between SP and TPSP.

When finally, SP decides not to stop using the allocated resources, the SP issues a respective "unsubscribe" order for said used resources, see step 585. This unsubscribe order is received by TPSP, who deallocates the used resources corresponding to that unsubscription order, step 592. Then finally, TPSP confirms to SP in a step 595 that the resources were deallocated, which is received by SP, step 597.

Finally, respective billing and accounting procedures can be triggered at the TPSP in order to complete and finish the overall on-demand TPSP service processing.

Now, with reference to **fig. 7** a schematic block diagram representation is given for illustrating the control flow in a first preferred embodiment of an inventional method implemented at the service provider side for identifying the "best" one of all offered services, which were automatically included according to figs 3 to 6. As this can be regarded as an Add-on functional component to that one described above with reference to figs 3 to 6, the location, where to fill-in the fig. 7 control flow, is marked in fig. 4 with a bold-printed arrow. In fig. 4 the Generic Resource Manager (GRM) is extended by a new function 480, called *getServiceProperties,* which is denoted similarly.

Assume, a TPSP service is offered more than one time e.g. by a plurality of TPSPs. These TPSP services are processed as described in the fig. 5 control flow including step 550. The issue is now, how to decide, which is the best TPSP service out of them. Before definitely subscribing to anyone of said TPSP services, according to this inventional embodiment the best service will be identified by a Meta Service Selector (MSS), which is later also called "Meta Resource Manager", in detail with reference to **fig. 7** as follows:

An Application Programming Interface (API) call "GetBestService" is performed, which is realized by the Meta Resource Manager (MRM). This call "invokes GetBestService", step 710, with a file as parameter, which accords to the following rules:

The file is written in a tagged based language e.g. XML.

This file lists information, which is strongly required to determine the best service by the MRM. The file can be e.g. coded in XML. This information contains the attributes of the TPSP service, which the MRM has to request calling the Resource Managers of the TPSP services, and the algorithm, which uses the attributes as an input to determine, which TPSP service fits best to the needs of the SP. The attributes are advantageously divided into attributes, which are mandatory to be answered by the TPSP service and attributes, which are optionally to be answered. Mandatory attributes ask e.g. for the service identification key (ID), an availability for a reservation of the service and the price. Purely optionally returnable details include e.g. the reliability characteristics of the TPSP service.

The input file, which the MRM receives with the "get Best Service" call, lists for each of said attribute a weight, which is adjustable by the SP. All properties with weights are considered during the determination of the best TPSP service by the MRM. Furthermore, the type and format of the XML file depends on the evaluation algorithms and is implementation-defined.

The MRM defines and owns the XML scheme, the XML file has to comply to. This provides for maximum flexibility for the list of attributes to be handled during the determination of the best service.

In addition for purposes of increased clarity and completeness, next an exemplary XML file usable in the above mentioned GetBestService Call is given without major further comments. A skilled person will understand it just by shortly stepping through. The weights serving the SP for an individually trimmable selection of TPSP services, are included at that point in time. All tagged items correspond to variable names that may be associated a value by the requested RM. The weights values are removed, step 720, before sending them to all competing RMs, step 730.

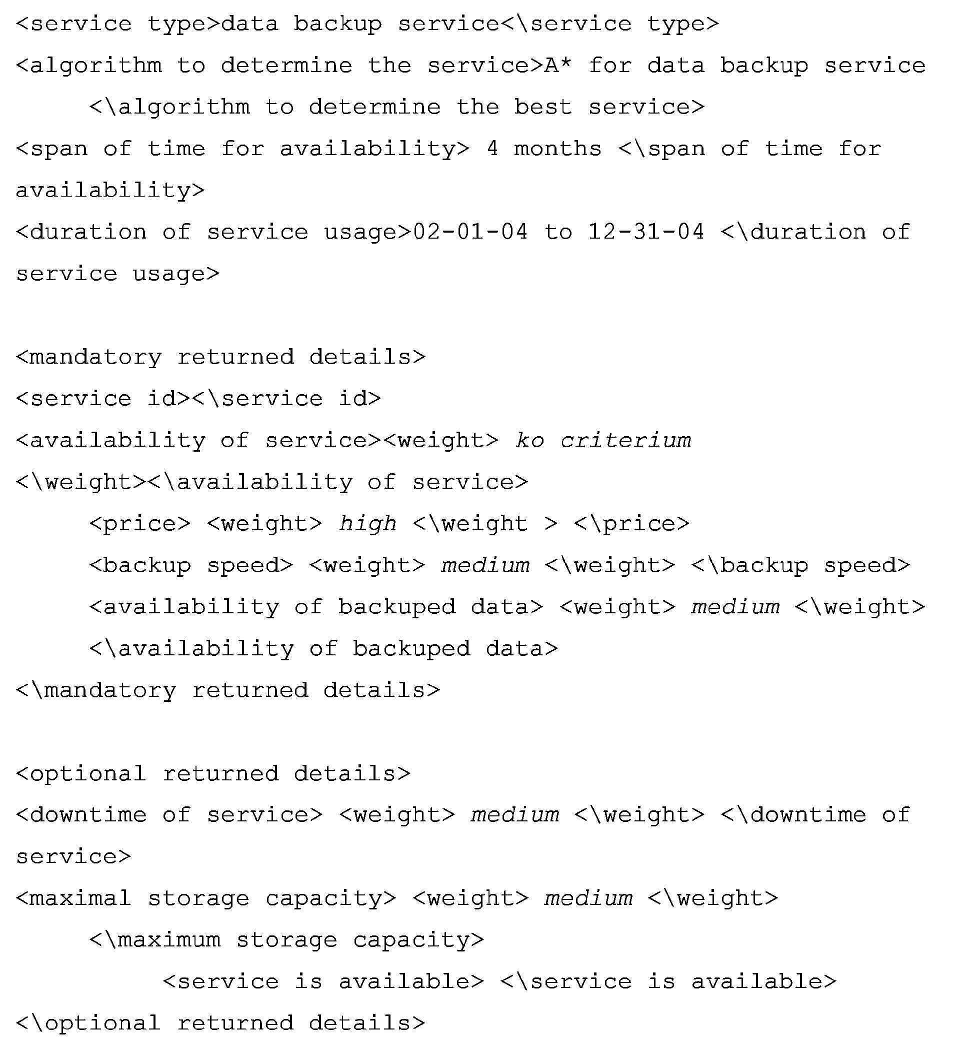

Then, each RM of the TPSPs, which is known by the MRM to offer a TPSP service close to the required one, receives and reads - step 740 - the request for information and the appended XML-file specifying the desired details on the TPSP service properties. To cover the receiving, reading and answering the request regarding the TPSP service properties, the RM of the TPSP service has to be enhanced by a "getServiceProperties" API. Assuming, the TPSP supports a shared service interface defining an agreed format on which and how to describe the offered on-demand service properties, the TPSP RM is enabled to add the service properties into the received XML file in a step 750.

Similarly, an exemplary filled-in XML file is given next:

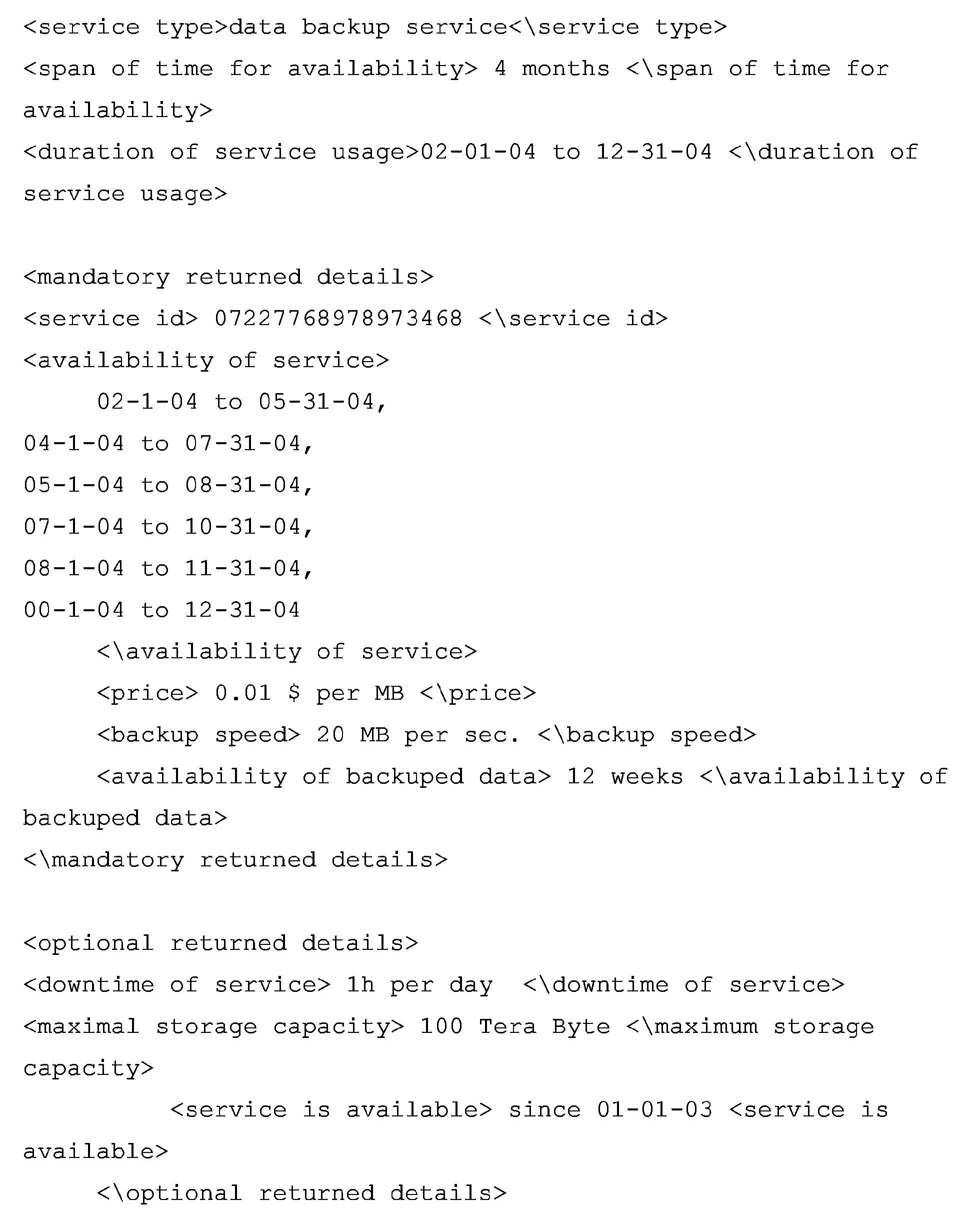

Then, in a step 760 the TPSP resource manager (RM) sends back the filled-in XML-form to the requesting SP MRM.

The MRM collects those answers from all responding TPSP's RMs in a step 765 and stores them in a database, step 770. Thus, in a next step 775, the TPSP is enabled to read the answers including the properties of the offered services and to "understand" and rate the contents of the answers. Thus, an evaluation algorithm runs according to the evaluationg algorithm in the "getBestService" Call in a respective program, evaluating all delivered information according to a set of predefined criteria including those weighting values provided by the TPSP.

Now, the MRM sets up a ranking algorithm for generating a ranking list setting the "best" service on top of a services list, for example, step 780.

The resulting top-level service is the best one according to the predetermined selection criteria, and no human intervention is needed for selecting the best service from the ranking list, step 785. Finally, the handle, ie, a program-detectable identification for the best service, is returned to the program having called the MRM, step 790.

Then, the control flow is performed continuing in fig. 5 with step 560 as described above.

Next, the second, alternative inventional embodiment will be described in more detail, which proposes that the interface data scheme agreed on between the SP and TPSP is part of the requested on-demand service itself.

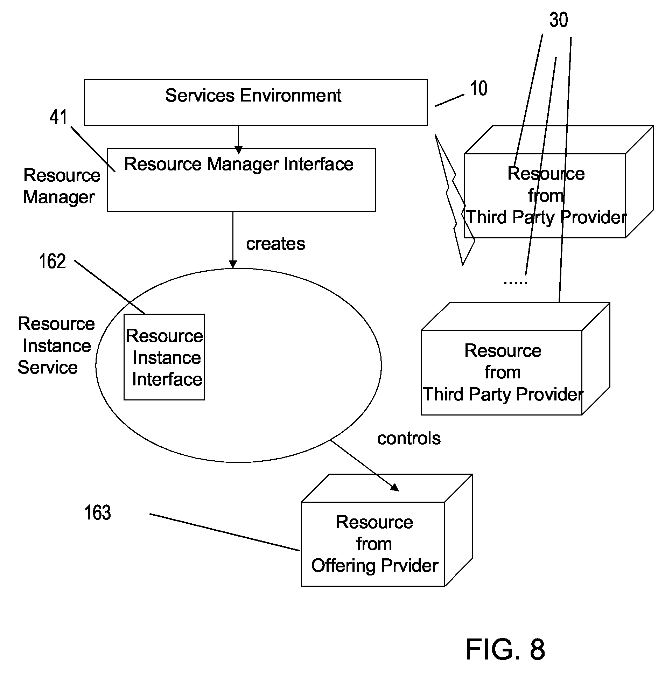

**Fig. 8** is a high-level schematic diagram representation illustrating the issue, which is addressed also by the second embodiment of the present invention. The present invention defines, how to select and integrate resources 30 - see the right hand portion of fig. 8 - from a TPSP into the service environment 10 of the SP after having selected the best service before.

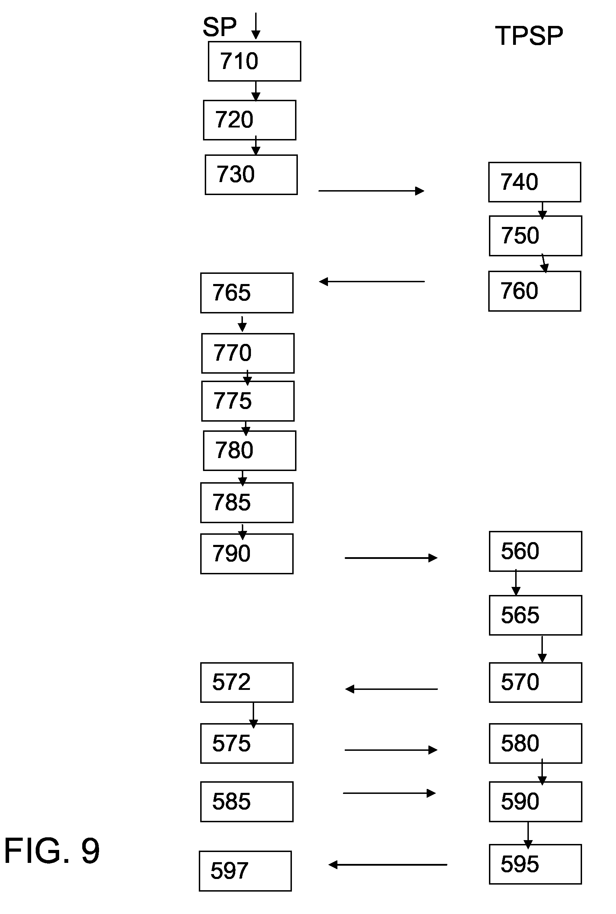

**Fig. 9** is a schematic block diagram representation illustrating the control flow for the above-mentioned second preferred embodiment of the inventional method implemented at the SP side for identifying the "best" one of all offered TPSP services due to the MRM and for integrating resources from a TPSP into the service environment of the SP by using the RM within the TPSP service. Here, the execution of selecting the best service and relating the chosen TPSP service into the SP environment asks for a MRM and for an improved RM within the TPSP, which offers the "getServiceProperties" functionality as a separate Application Programming Interface (API). In order to avoid redundant information, the description of fig. 9 is given by referencing back to the description of fig. 7 for the steps 710 to 790, ending with the handle, ie, a program-detectable identification for the best service, being returned to the program having called the MRM, followed by the description of steps 560 - to receive the allocation order from SP - to 595 according to fig. 5.

From the above description should reveal that the workflow described in this exemplary workflow can be subjected to variousus modifications. Those modifications however, form part of the inventional approach of encapsulating the TPSP services into the service environment of the SP and selecting the best of them automatically.

The present invention can be realized in hardware, software, or a combination of hardware and software. A tool according to the present invention can be realized in a centralized fashion in one computer system, or in a distributed fashion where different elements are spread across several interconnected computer systems. Any kind of computer system or other apparatus adapted for carrying out the methods described herein is suited. A typical combination of hardware and software could be a general-purpose computer system with a computer program that, when being loaded and executed, controls the computer system such that it carries out the methods described herein.

The present invention can also be embedded in a computer program product, which comprises all the features enabling the implementation of the methods described herein, and which - when loaded in a computer system - is able to carry out these methods.

Computer program means or computer program in the present context mean any expression, in any language, code or notation, of a set of instructions intended to cause a system having an information processing capability to perform a particular function either directly or after either or both of the following
a) conversion to another language, code or notation;
b) reproduction in a different material form.

## Claims

1. A method for selecting a particular Third-Part Service provider (TPSP) service from a plurality of available TPSP services covering similar or the same business objective and being offered by one or a respective plurality of TPSPs to a service provider (SP) via an electronic network, said method being **characterized by** the steps of:
a) calling (710) a Meta Service Selector (MSS) to select the best TPSP service according to a predetermined evaluating scheme referring to predetermined evaluation attributes and a predetermined evaluation algorithm,
b) sending (730) an enquiring request enquiring respective request properties of a TPSP service to a TPSP, wherein the enquiring request demands the enquired service property information to be delivered formatted according to an interface data scheme agreed on between the enquiring SP request and said TPSP service,
d) evaluating (775) the enquired information from said plurality of TPSPs according to a predetermined rating (780) scheme,
e) selecting (785) a particular TPSP service for providing it via an electronic network to a service requesting client of the SP.

2. The method according to claim 1, wherein the enquiring request specifies time information, when the TPSP service selection (785) shall be performed.

3. The method according to the preceding claim, wherein a flag is used for encoding the point in time, when the TPSP service has to be selected.

4. The method according to the preceding claim, wherein the point in time is selected from the group as follows:
a) the point in time, at which the TPSP service is offered by said SP, or,
b) the point in time, at which a client of the SP declares his willing to buy said SP service, or
c) the point in time, at which the TPSP service is invoked the first time, or
d) the point in time, at which the TPSP service is invoked.

5. The method according to claim 1, wherein the on-demand TPSP service is encapsulated via a resource instance created by a Generic Resource Manager (40)(GRM) acting as interface (41) .

6. The method according to claim 1, wherein the interface data scheme agreed on between enquiring SP and said responding TPSP is part of the requested on-demand service.

7. A method for selecting a particular TPSP service from a plurality of available TPSP services covering similar or the same business objective and being offered by one or a respective plurality of TPSPs to a SP via an electronic network, said method being **characterized by** the steps of:
a) receiving (740) an enquiring request enquiring respective request properties of a TPSP service to a TPSP, wherein the enquiring request demands the enquired service property information to be delivered formatted according to an interface data scheme agreed on between the enquiring SP request and said TPSP service,
b) answering (750, 760) the enquired information to the enquiring SP.

8. A computer system having means for performing the steps of a method according to one of the preceding claims 1 to 7.

9. A computer program for execution in a data processing system comprising a functional component having computer program code portions for performing respective steps of:
a) calling (710) a Meta Service Selector (MSS) to select the best TPSP service according to a predetermined evaluating scheme referring to predetermined evaluation attributes and a predetermined evaluation algorithm,
b) sending (730) an enquiring request enquiring respective request properties of a TPSP service to a TPSP, wherein the enquiring request demands the enquired service property information to be delivered formatted according to an interface data scheme agreed on between the enquiring SP request and said TPSP service,
d) evaluating (775) the enquired information from said plurality of TPSPs according to a predetermined rating (780) scheme,
e) selecting (785) a particular TPSP service for providing it via an electronic network to a service requesting client of the SP.

10. A computer program for execution in a data processing system comprising a functional component having computer program code portions for performing respective steps of:
a) receiving (740) an enquiring request enquiring respective request properties of a TPSP service to a TPSP, wherein the enquiring request demands the enquired service property information to be delivered formatted according to an interface data scheme agreed on between the enquiring SP request and said TPSP service,
b) answering (750, 760) the enquired information to the enquiring SP.

11. A computer program product stored on a computer usable medium comprising computer readable program means for causing a computer to perform the method of anyone of the claims 1 to 7, when said computer program product is executed on a computer.

12. A method for providing on-demand services via an electronic network from a service provider (SP) to a client requesting a service, wherein a third-party service provider (TPSP) is involved for providing one or more on-demand TPSP services (48) as a contribution to said client-requested service,
**characterized by**:
operating a service environment (10), which is ready to include e.g. a plurality (12) of handles to resources (163, 165, 173, 175, 177, 183, 185) required to fulfill the service, wherein a generic interface (41) definition is used between TPSP and SP comprising a pre-defined syntax and semantic for encapsulating said requested TPSP services into the service environment (10) of said SP.

13. The method according to claim 12, wherein said generic interface (41) definition allows performing the following steps:
a) requesting (505) a handle for said TPSP service from said TPSP,
b) receiving (550) a response to said request including a handle to a resource instance service dedicated to fulfill said TPSP service,
c) issuing (555) an allocation order for allocating resources defined by said resource instance service,
d) using (575) said TPSP service via an access interface associated with said allocated resources
e) issuing (585) a deallocation order for said used resources.

14. A method for providing Third-Party Service Provider (TPSP) services from a TPSP via an electronic network to a Service Provider (SP) requesting a predefined TPSP service,
**characterized by**
operating a service environment (10), which is ready to offer a plurality (12) of handles to resources (163, 165, 173, 175, 177, 183, 185) required to fulfill said TPSP service, wherein a generic interface (41) definition is used between said SP and said TPSP comprising a pre-defined syntax and semantic for encapsulating said requested TPSP services into the service environment (10) of said SP.

15. The method according to the preceding claim, wherein said generic interface definition allows performing the following steps:
a) receiving (510) a request for a handle for said TPSP service from said SP,
b) creating (410; 540) a resource instance service (162, 164, 172, 174, 176, 182, 184) associated with said requested handle and a handle for said TPSP service,
c) issuing (545) said requested handle to the requesting SP
d) receiving (560) an allocation order for allocating resources defined by said resource instance service
e) allocating (430; 565) said ordered resource, if said resources are available for use,
f) receiving (580) usage commands for the usage of said allocated resources via an access interface associated with said allocated resources,
g) receiving (592) a deallocation order for said used resources,
h) deallocating (450; 592) said used resources.

16. The method according to claim 13 or claim 15, wherein said generic interface (41) definition allows performing the steps of subscribing (440) and unsubscribing (460) to a resource.

17. The method according to claim 13 or claim 15, wherein a resource instance comprises another service.

18. The method according to claim 13 or claim 15, wherein said generic interface (41) definition allows performing the steps of disclosing (470; 515) to the SP information concerning the availability of resources available at the TPSP.

19. The method according to claim 15, wherein said steps are implemented as a stateful web service made available via the Internet.

20. A computer system having means for performing the steps of a method according to one of the preceding claims 12 to 19.

21. A computer program for execution in a data processing system comprising a functional component having computer program code portions for performing respective steps of:
a) receiving (510) a request for a handle for said TPSP service from said SP,
b) creating (410; 540) a resource instance service (162, 164, 172, 174, 176, 182, 184) associated with said requested handle and a handle for said TPSP service,
c) issuing (545) said requested handle to the requesting SP,
d) receiving (560) an allocation order for allocating resources defined by said resource instance service
e) allocating (430; 565) said ordered resource, if said resources are available for use,
f) receiving (580) usage commands for the usage of said allocated resources via an access interface associated with said allocated resources,
g) receiving (592) a deallocation order for said used resources,
h) deallocating (450; 592) said used resources,
when said computer program code portions are executed on a computer.

22. A computer program for execution in a data processing system comprising a functional component having computer program code portions for performing respective steps of:
a) receiving (510) a request for a handle for said TPSP service from said SP,
b) creating (410; 540) a resource instance service (162, 164, 172, 174, 176, 182, 184) associated with said requested handle and a handle for said TPSP service,
c) issuing (545) said requested handle to the requesting SP,
d) receiving (560) an allocation order for allocating resources defined by said resource instance service
e) allocating (430; 565) said ordered resource, if said resources are available for use,
f) collection data on the usage of the subscription by the SP (580)
g) receiving (592) an unsubscribe by the SP
h) deallocating (450; 592) said used resources,
when said computer program code portions are executed on a computer.

23. A computer program product stored on a computer usable medium comprising computer readable program means for causing a computer to perform the method of anyone of the claims 12 to 19,
when said computer program product is executed on a computer.
